# EUROPEAN PATENT SPECIFICATION

(11) **EP 2 566 588 B1**
(45) Date of publication and mention of the grant of the patent: **30.08.2017**
(21) Application number: 11797383.4
(22) Date of filing: 21.06.2011
(51) Int. Cl.: A63B 71/08, A61C 5/90

(54) **A MOUTH GUARD**
MUNDSCHUTZ
PROTÈGE-DENTS

(30) Priority: 25.06.2010 AU 2010902826
(43) Date of publication of application: 13.03.2013
(73) Proprietor: Signature Mouthguards Pty Limited, Hornsby, NSW 1635 (AU)
(72) Inventor: BURNS, Peter, Artarmon, NSW 2064 (AU)
(74) Representative: Cabinet Plasseraud
(86) International application number: PCT/AU2011/000750
(87) International publication number: WO 2011/160169

(56) References cited:
- AU-B2- 778 255
- AU-B2- 778 255
- US-A- 3 211 143
- US-A- 4 765 324
- US-A1- 2002 144 691
- US-A1- 2002 144 691
- US-A1- 2008 138 755
- US-A1- 2010 051 038
- US-B1- 6 986 354

## Description

### Technical Field

The present invention relates to mouth guards and more particularly, but not exclusively to mouth guards used by sports participants.

### Background of the Invention

Mouth guards have consisted of a number of types, including those constructed of thermoplastics material, which are heated (typically in hot water) and then applied to the user's mouth so that the mouth guard is moulded to fit the user's teeth and jaw. A more expensive type of mouth guard (custom fitted) is that provided generally by dentists. The "custom fitted" mouth guards are manufactured from an impression taken of the user's teeth and jaw. Plastics material is then applied to the mould generated from the impression. More recently, laminated pressure mouth guards have been made available.

Previous mouth guards are also described in Patent documents PCT/AU99/00458 (or AU 778 255), PCT/AU00/01166, US 2002/144691, US 4,765,324 and US 3,211,143 disclose a mouth guard according to the preamble of claim 1.

At least some of the above described mouth guards have the disadvantage that they can transmit almost entirely an impact to the user's teeth and jaw.

### Object of the Invention

It is the object of the present invention to overcome or substantially ameliorate the above disadvantage.

### Summary of the Invention

There is disclosed herein a mouth guard including a moulded body of "C-shaped" configuration so as to provide a forward portion and two arms diverting rearwardly from the forward portion, the forward portion and both arms being generally of a "U-shaped" transverse cross section so as to provide an inner flange and an outer flange joined by a base, each arm therefore having a portion of the base, a portion of the inner flange and of the outer flange; and
a pair of shields, each shield being located in a respective one of the arm base portions, each shield being formed of resilient material so as to be deformed upon a compression force being applied thereto; characterised in that
each shield is embedded in the body and is corrugated so as to have sequentially arranged ridges and troughs;
extending transverse relative to the arms, and
the shields are formed of a material less resilient than the material forming the body.

Preferably, a bridge is attached to the shields so as to extend therebetween.

Preferably, the bridge is embedded in the inner flange.

Preferably, the shields are formed of nylon or a polyamide.

Preferably, the body is formed of a vinyl containing polydimethylsiloxane.

Preferably, the body is formed of an EVA copolymer.

Preferably, the shields are rear shields, and said mouth guard includes a labial shield embedded in the forward portion of the outer flange.

Preferably, the labial shield is joined to the rear shields.

Preferably, said bridge is a first bridge, and said mouth guard includes a second bridge, the second bridge being attached to the rear shields.

Preferably, the second bridge extends at least partly along the forward base portion.

Preferably, each arm has a longitudinal length, with each rear shield extending at least 50% of the longitudinal length of the respective arm.

### Brief Description of the Drawings

Preferred forms of the present invention will now be described by way of example with reference to the accompanying drawings wherein:

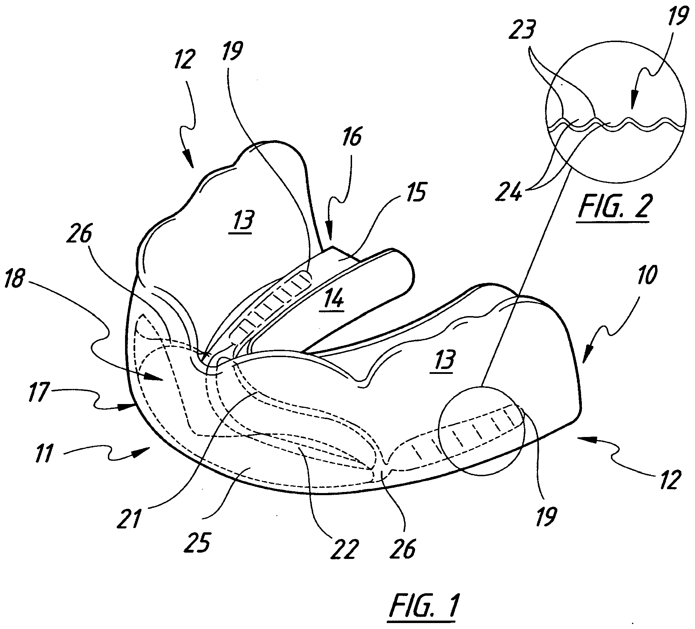

Figure 1 is a schematic isometric view of a mouth guard incorporating shields;
Figure 2 is a schematic side elevation of a shield employed in a mouth guard of Figure 1;
Figure 3 is a schematic bottom plan view of the mouth guard of Figure 1;
Figure 4 is a schematic sectioned side elevation of the mouth guard as shown in Figure 3 sectioned along the line 4-4;

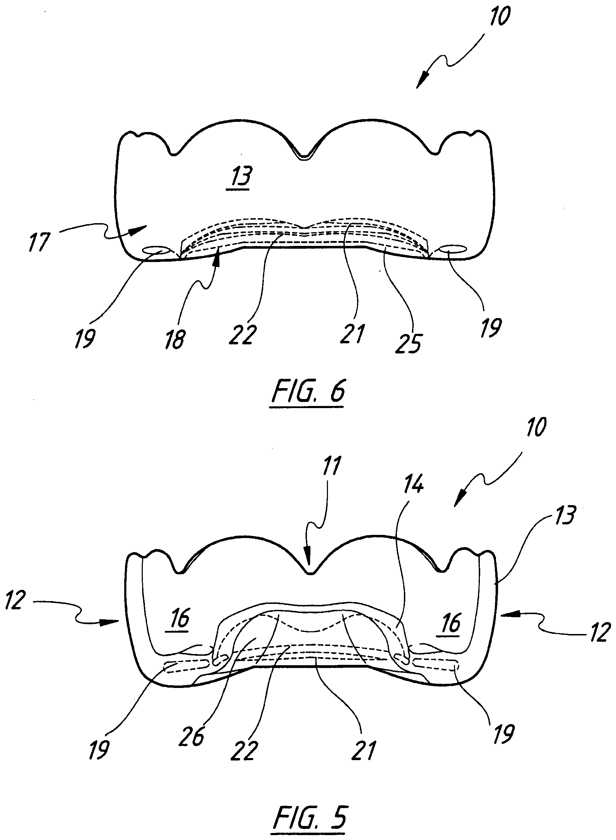

Figure 5 is a schematic rear elevation of the mouth guard of Figure 1; and
Figure 6 is a schematic front elevation of the mouth guard of Figure 1.

### Detailed Description of the Preferred Embodiments

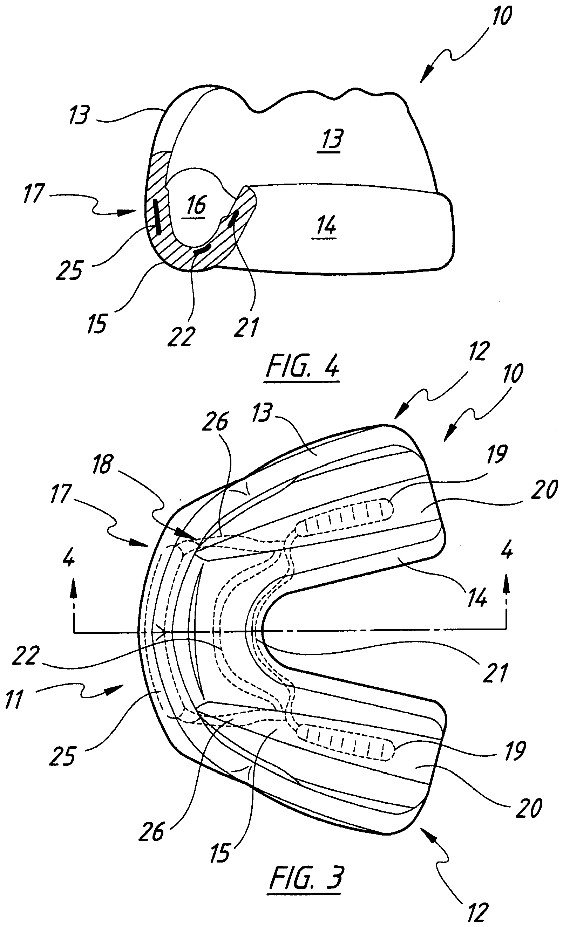

In the accompanying drawings there is schematically depicted a mouth guard 10. The mouth guard 10 is of an overall "C" shape so as to provide a forward portion 11 and two rearwardly extending arms 12. In transverse cross section, the portion 11, and the arms 12 are each of a U-shaped configuration as best seen in Figure 4 so that the mouth guard 10 has an outer flange 13 joined to an inner flange 14 by a base 15. Between the flanges 13 and 14 is a trough 16 into which a wearer's teeth project.

The mouth guard 10 has a body 17 that provides the flanges 13 and 14 as well as the base 15. Embedded in the body 17 is a shield member 18. The shield member 18 includes a pair of rear shields 19 that are embedded in the base portions 20 of the arms 12. The members 19 are integrally moulded with a rear bridge 21 that is at least partly located in a forward portion of the inner flange 14, and a forward bridge 22 that is located in a forward portion of the base 15.

Preferably the shields 19 are of a corrugated configuration so as to have ridges 23 separated by troughs 24, with the ridges 23 and troughs 24 extending generally transverse relative to the arms 12.

Preferably the shield member 18 further includes a forward (labial) shield 25 that is joined to the shields 19 by bridges 26. According to the invention, the shield member 18 is formed of material that is less resilient than material forming the body 11. Accordingly should the wearer be subject to an impact, the shields 19 either elastically or plastically deform resulting from deformation of the body 17. The deformation of the shields 19 being flattening of the corrugations (ridges 23 and troughs 24).

Each arm 12 has a longitudinal length extending in the direction of the arms 12, with the shields 19 occupying at least 50% of the length of each arm 12.

Preferably, the shields 19 are formed of nylon or a polyamide.

Preferably, the body 17 is moulded of a vinyl containing polydimethylsiloxane.

In an alternative preferred form, the body is formed of an EVA copolymer.

Preferably, the shield member 18 is moulded, and the body 17 subsequently moulded around the shield member 18.

## Claims

1. A mouth guard (10) including a moulded body (17) of "C-shaped" configuration so as to provide a forward portion (11) and two arms (12) diverting rearwardly from the forward portion (11), the forward portion (11) and both arms (12) being generally of a "U-shaped" transverse cross section so as to provide an inner flange (14) and an outer flange (13) joined by a base (15), each arm (12) therefore having a portion (20) of the base (15), a portion of the inner flange (14) and of the outer flange (13); and
a pair of shields (19), each shield (19) being located in a respective one of the arm base portions (20), each shield (19) being formed of resilient material so as to be deformed upon a compression force being applied thereto; **characterised in that**
each shield (19) is embedded in the body (17) and is corrugated so as to have sequentially arranged ridges and troughs extending transverse relative to the arms, and
the shields are formed of a material less resilient than the material forming the body.

2. The mouth guard (10) of claim 1, wherein a bridge (22) is attached to the shields so as to extend therebetween.

3. The mouth guard of claim 2, wherein the bridge (22) is embedded in the inner flange (14).

4. The mouth guard (10) of claim 1, 2 or 3, wherein the shields (19) are formed of nylon or a polyamide.

5. The mouth guard (10) of any one of claims 1 to 4, wherein the body (17) is formed of a vinyl containing polydimethylsiloxane.

6. The mouth guard of any one of claims 1 to 4, wherein the body (17) is formed of an EVA copolymer.

7. The mouth guard (10) of any one of claims 1 to 6, wherein the shields (19) are rear shields (19), and said mouth guard (10) includes a labial shield (25) embedded in the forward portion of the outer flange (13).

8. The mouth guard (10) of claim 7, wherein the labial shield (25) is joined to the rear shields (19).

9. The mouth guard (10) of claim 8 when appended to claim 2 or 3, wherein said bridge (22) is a first bridge (22), and said mouth guard includes a second bridge (22), the second bridge (22) being attached to the rear shields (19).

10. The mouth guard (10) of claim 9, wherein the second bridge (22) extends at least partly along the forward base portion.

11. The mouth guard (10) of any one of claims 7 to 10, wherein each arm (12) has a longitudinal length, with each rear shield (19) extending at least 50% of the longitudinal length of the respective arm (12).

## Patentansprüche

1. Mundschutz (10), der einen geformten Körper (17) mit "C-förmiger" Auslegung einschließt, sodass ein vorderer Abschnitt (11) und zwei von dem vorderen Abschnitt (11) nach hinten abgehende Arme (12) bereitgestellt werden, wobei der vordere Abschnitt (11) und beide Arme (12) im Allgemeinen einen "U-förmigen" Querschnitt aufweisen, sodass ein innerer Flansch (14) und ein äußerer Flansch (13), verbunden durch eine Basis (15), bereitgestellt werden und jeder Arm (12) daher einen Abschnitt (20) der Basis (15), einen Abschnitt des inneren Flansches (14) und des äußeren Flansches (13) aufweist; und
ein Paar Schutzelemente (19), wobei jedes Schutzelement (19) in einem jeweiligen der Armbasisabschnitte (20) angeordnet ist und jedes Schutzelement (19) aus einem elastischen Material ausgebildet ist, sodass es bei einer einwirkenden Druckkraft verformt wird; **dadurch gekennzeichnet, dass**
jedes Schutzelement (19) in den Körper (17) eingebettet ist und gewellt ist, sodass es aufeinanderfolgend angeordnete Rippen und Mulden aufweist, die sich quer zu den Armen erstrecken, und
die Schutzelemente aus einem Material ausgebildet sind, das weniger elastisch ist als das den Körper ausbildende Material.

2. Mundschutz (10) nach Anspruch 1, wobei an den Schutzelementen ein sich dazwischen erstreckender Steg (22) angebracht ist.

3. Mundschutz nach Anspruch 2, wobei der Steg (22) in den inneren Flansch (14) eingebettet ist.

4. Mundschutz (10) nach Anspruch 1, 2 oder 3, wobei die Schutzelemente (19) aus Nylon oder einem Polyamid ausgebildet sind.

5. Mundschutz (10) nach einem der Ansprüche 1 bis 4, wobei der Körper (17) aus einem Polydimethylsiloxan ausgebildet ist, das Vinyl enthält.

6. Mundschutz nach einem der Ansprüche 1 bis 4, wobei der Körper (17) aus einem EVA-Copolymer ausgebildet ist.

7. Mundschutz (10) nach einem der Ansprüche 1 bis 6, wobei die Schutzelemente (19) hintere Schutzelemente (19) sind und der Mundschutz (10) ein in den vorderen Abschnitt des äußeren Flansches (13) eingebettetes Lippenschutzelement (25) einschließt.

8. Mundschutz (10) nach Anspruch 7, wobei das Lippenschutzelement (25) mit den hinteren Schutzelementen (19) verbunden ist.

9. Mundschutz (10) nach Anspruch 8, bei Bezug auf Anspruch 2 oder 3, wobei der Steg (22) ein erster Steg (22) ist und der Mundschutz einen zweiten Steg (22) einschließt, wobei der zweite Steg (22) an die hinteren Schutzelemente (19) angebracht ist.

10. Mundschutz (10) nach Anspruch 9, wobei sich der zweite Steg (22) zumindest teilweise entlang des vorderen Basisabschnitts erstreckt.

11. Mundschutz (10) nach einem der Ansprüche 7 bis 10, wobei jeder Arm (12) eine Längsrichtungslänge aufweist und jedes hintere Schutzelement (19) sich über zumindest 50 % der Längsrichtungslänge des jeweiligen Arms (12) erstreckt.

## Revendications

1. Protège-dents (10) comprenant un corps moulé (17) de configuration « en forme de C » de manière à fournir une partie avant (11) et deux bras (12) divergeant vers l'arrière à partir de la partie avant (11), la partie avant (11) et les deux bras (12) étant généralement de section transversale « en forme de U » de manière à fournir un flanc interne (14) et un flanc externe (13) reliés par une base (15), chaque bras (12) comportant donc une partie (20) de la base (15), une partie du flanc interne (14) et du flanc externe (13) ; et
une paire de protections (19), chaque protection (19) étant située dans une des parties (20) respectives de la base du bras, chaque protection (19) étant formée d'un matériau résilient de manière à être déformée lorsqu'une force de compression y est appliquée ; **caractérisé en ce que**
chaque protection (19) est encastrée dans le corps (17) et est ondulée de manière à avoir des nervures disposées séquentiellement et des creux s'étendant transversalement par rapport aux bras, et
les protections sont formées d'un matériau moins résilient que le matériau formant le corps.

2. Protège-dents (10) selon la revendication 1, dans lequel un pont (22) est fixé aux protections de manière à s'étendre entre elles.

3. Protège-dents selon la revendication 2, dans laquelle le pont (22) est encastré dans le flanc interne (14).

4. Protège-dents (10) selon la revendication 1, 2 ou 3, dans lequel les protections (19) sont formées en nylon ou en polyamide.

5. Protège-dents (10) selon l'une quelconque des revendications 1 à 4, dans lequel le corps (17) est formé d'un polydiméthylsiloxane contenant du vinyle.

6. Protège-dents selon l'une quelconque des revendications 1 à 4, dans lequel le corps (17) est formé d'un copolymère EVA.

7. Protège-dents (10) selon l'une quelconque des revendications 1 à 6, dans lequel les protections (19) sont des protections arrière (19), et ledit protège-dents (10) comprend une protection labiale (25) encastrée dans la partie avant du flanc externe (13).

8. Protège-dents (10) selon la revendication 7, dans lequel la protection labiale (25) est reliée aux protections arrière (19).

9. Protège-dents (10) selon la revendication 8 lorsqu'elle est rattachée à la revendication 2 ou 3, dans lequel ledit pont (22) est un premier pont (22), et ledit protège-dents comprend un second pont (22), le second pont (22) étant fixé aux protections arrière (19).

10. Protège-dents (10) selon la revendication 9, dans lequel le second pont (22) s'étend au moins partiellement le long de la partie avant de la base.

11. Protège-dents (10) selon l'une quelconque des revendications 7 à 10, dans lequel chaque bras (12) a une longueur longitudinale, avec chaque protection arrière (19) s'étendant au moins sur 50 % de la longueur longitudinale du bras (12) respectif.
